# EUROPEAN PATENT SPECIFICATION

(11) **EP 1 418 086 B1**
(45) Date of publication and mention of the grant of the patent: **07.03.2007**
(21) Application number: 03025185.4
(22) Date of filing: 04.11.2003
(51) Int. Cl.: B60N 2/28

(54) **Seat belt deviation device for infant car seat used with a fixed base**
Vorrichtung zur Umlenkung eines Sicherheitgurtes für Kraftfahrzeug-Kindersitz zur Benutzung mit einer fixirten Basis
Dispositif de déviation d'une ceinture de sécurité pour siège automobile d'enfant utilisé avec une base fixe

(30) Priority: 05.11.2002 GB 0225735; 09.10.2003 GB 0323600
(43) Date of publication of application: 12.05.2004
(73) Proprietor: Equipbaby Limited, Windsor, Berkshire SL4 1DN (GB)
(72) Inventor: Barker, Derrick John Martin, Bishampton, Worcestershire WR10 2LU (GB)
(74) Representative: Jaunez, Xavier

(56) References cited:
- WO-A-01/64470
- DE-A- 3 107 752
- US-A- 5 277 472
- US-A1- 2002 043 840

## Description

The present invention relates to an infant car seat.

Infant car seats are increasingly being used as part of an integrated travel system for babies. Convenience of installation into both the vehicle and stroller is an important feature. Additionally improvements in safety are introducing fixed bases secured by way of the adult belt into which the infant car seat is retained whilst in the vehicle.

US 2002/0043840 A1 describes a car seat in accordance with the preamble of claim 1.

The invention proposes a fixing base which is secured by an adult seat belt in a vehicle and which provides a securing means for the infant car seat and incorporates a seat belt deviation device.

The invention provides a device, which provides a deviated condition in the diagonal portion of the seat belt enabling the user to remove the infant car seat without the obstruction of the diagonal belt.

According to the present invention, there is provided a car seat as defined in Claim 1.

The dependent claims set out certain preferred embodiments of the invention.

The above and other aspects of the invention will now be described in further detail, by way of example only, with reference to the accompanying figures in which:
Figure 1 is a perspective view of a first embodiment of a car seat in accordance with the present invention showing four stages of use; and

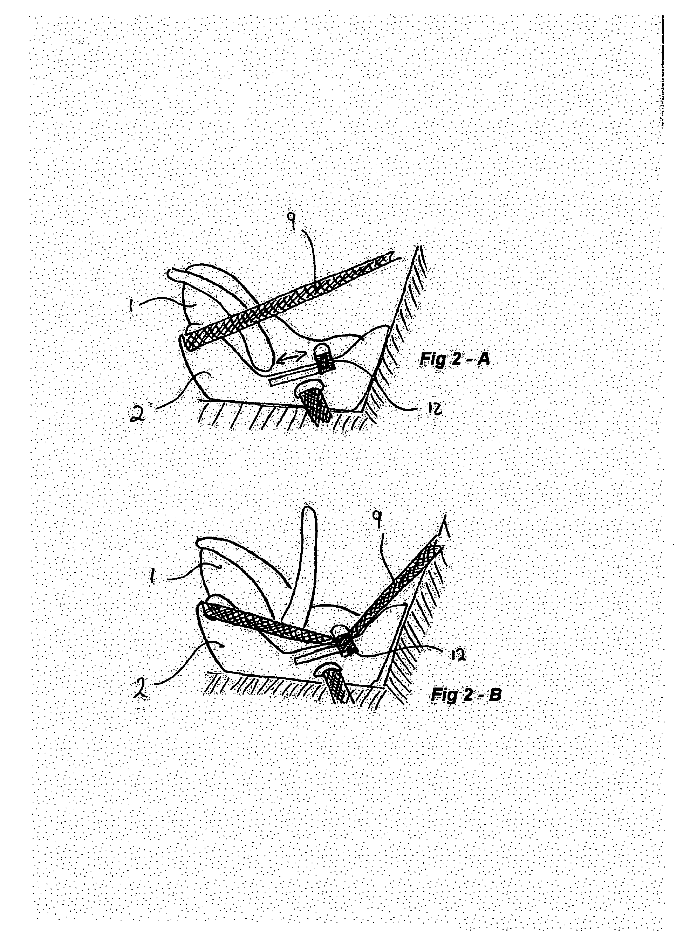

Figure 2 is a side view of a second embodiment of a car seat in accordance with the present invention in two stages of use.

The invention provides a car seat having a base (2) and car seat shell (1) attached to which is a carry handle (5). The base (2) provides location means for securing an adult belt (9) in a conventional way.

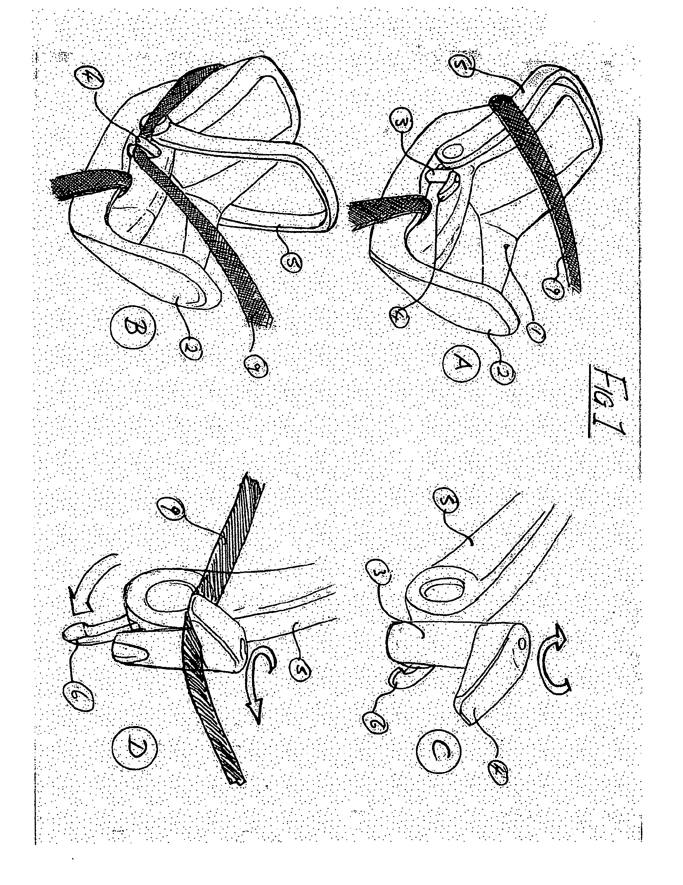

In a first embodiment (Figure 1), the base (2) incorporates a deviation device (3) which has an overhang feature (4). The device (3) is also rotatable such that the seat belt (9) can be deviated and retained under it.

The handle (5) of the car seat shell (1) includes an interface feature (6) which acts upon the body of device (3) such that when the car seat (1) is relocated into the base (2) the handle, feature (6), deflects the device (3) when rotating the handle (5) into the stowed condition. In so doing the seat belt (9) releases from the overhang (4).

In a second embodiment, the deviation device (12) is able to slide along the side of the base (2) and incorporates an attachment means for deviating the adult belt (9).

The following statements set out certain features of preferred embodiments of the invention:
1. A car seat with a securing base (2) secured in a vehicle using a three point lap and diagonal belt (9). Said base incorporates a belt deviation device as described, which provides a retaining means for the diagonal belt portion, when deviating the belt prior to removing the car seat from the base.
2. In one arrangement the device that is rotatable to establish a condition to retain the diagonal belt portion whilst removing the car seat from the base.
3. In a preferred embodiment of this arrangement the deviation device (3) interfaces with the handle operation so as to displace the device into a condition, which releases the diagonal belt automatically after refitting the car seat into the base.
4. In another arrangement, the deviation device (12) has an attachment means and retaining feature for the diagonal belt, which is able to slide on the side of the base.
5. A deviation device may be positioned on both sides of the base.
6. The deviation device can act as a retaining lock means for securing the car seat into the base.

## Claims

1. An infant car seat apparatus for a vehicle having a seat and a three-point seat belt system having lap and diagonal portions, the apparatus comprising a base (2) and a removable infant seat (1), wherein the base (2) is securable to the vehicle seat by the three point seat belt system; **characterised in that** said base (2) further comprises a belt deviation device (3, 12) moveable between a first and a second position, wherein said belt deviation device engages said diagonal belt portion (9) when in said first position, and disengages said diagonal belt portion, when in said second position, and wherein said belt deviation device provides a retaining means for the diagonal belt portion (9) of the belt system when said diagonal belt portion (9) is deviated prior to removal of said seat from said base (2).

2. An infant car seat apparatus as claimed in claim 1 wherein the belt deviation device is rotatable and wherein the infant seat (1) further comprises a carry handle (5), pivotably mounted on said seat and movable between a first position, in which the seat is secured to the base, and a second position, in which the seat can be removed from said base; wherein movement of said handle from said first position to said second position actuates rotations of said belt deviation device.

3. An infant car seat apparatus as claimed in Claim 1 in which the belt deviation device (3) is slidably connected to said base.

4. An infant car seat apparatus as claimed in Claim 1 or Claim 2 wherein the belt deviation device (3) is operational on either side of base (2).

## Patentansprüche

1. Kinderautositzvorrichtung für ein Fahrzeug mit einem Sitz und einem Drei-Punkt-Gurtsystem mit Schoß- und Diagonalteilen, wobei die Vorrichtung eine Basis (2) und einen abnehmbaren Kindersitz (1) umfasst und die Basis (2) durch das Drei-Punkt-Gurtsystem an dem Fahrzeugsitz befestigbar ist, **dadurch gekennzeichnet, dass** die Basis (2) ferner eine Gurtumlenkungsvorrichtung (3, 12) aufweist, die zwischen einer ersten Stellung und einer zweiten Stellung bewegbar ist, wobei die Gurtumlenkungsvorrichtung in der ersten Stellung an dem diagonalen Gurtteil (9) angreift und den genannten diagonalen Gurtteil in der zweiten Stellung freigibt, und wobei die Gurtumlenkungsvorrichtung ein Rückhaltemittel für den diagonalen Gurtteil (9) des Gurtsystems bildet, wenn der diagonale Gurtteil (9) vor Abnahme des Sitzes von der Basis (2) umgelenkt wird.

2. Kinderautositzvorrichtung nach Anspruch 1, bei der die Gurtumlenkungsvorrichtung drehbar ist und der Kindersitz (1) ferner einen Tragegriff (5) umfasst, der auf dem Sitz drehbar angebracht ist und zwischen einer ersten Stellung, in welcher der Sitz an der Basis befestigt ist, und einer zweiten Stellung, in welcher der Sitz von der Basis abgenommen werden kann, bewegbar ist; wobei die Bewegung des Griffes aus der ersten Stellung in die zweite Stellung Rotationen der Gurtumlenkungsvorrichtung bewirkt.

3. Kinderautositzvorrichtung nach Anspruch 1, bei der die Gurtumlenkungsvorrichtung (3) mit der Basis verschiebbar verbunden ist.

4. Kinderautositzvorrichtung nach Anspruch 1 oder 2, bei der die Gurtumlenkungsvorrichtung (3) auf beiden Seiten der Basis (2) betriebsfähig ist.

## Revendications

1. Ensemble de siège de voiture pour enfant pour un véhicule ayant un siège et un système de ceinture de sécurité à trois points, ayant des parties de ceinture ventrale et diagonale, ledit ensemble comprenant une base(2) et un siège d'enfant amovible (1), dans lequel la base (2) peut être fixée sur le siège de véhicule grâce au système de ceinture de sécurité à trois points, **caractérisé en ce que** ladite base (2) comprend en outre un dispositif de déviation de la ceinture (3, 12) qui peut se déplacer entre une première et une seconde positions, dans lequel ledit dispositif de déviation de la ceinture s'engage avec ladite partie de ceinture diagonale (9) lorsqu'il se trouve dans la première position, et se dégage de ladite partie de ceinture diagonale lorsqu'il se trouve dans ladite seconde position, et dans lequel ledit dispositif de déviation de la ceinture fournit un moyen de retenue pour la partie de ceinture diagonale (9) du système de ceinture lorsque ladite partie de ceinture diagonale (9) est déviée avant l'enlèvement dudit siège d'enfant (1) hors de ladite base (2).

2. Ensemble de siège de voiture pour enfant selon la revendication 1, dans lequel le dispositif de déviation de la ceinture peut tourner, et dans lequel le siège d'enfant (1) comprend en outre une poignée de transport (5), qui est montée pour pouvoir pivoter sur ledit siège et qui est mobile entre une première position, dans laquelle le siège est fixé sur la base, et une seconde position, dans laquelle le siège peut être enlevé de ladite base ; dans lequel le mouvement de ladite poignée de ladite première position vers ladite seconde position commande la rotation dudit dispositif de déviation de la ceinture.

3. Ensemble de siège de voiture pour enfant selon la revendication 1, dans lequel le dispositif de déviation de la ceinture (3) est raccordé, en pouvant coulisser, à ladite base.

4. Ensemble de siège de voiture pour enfant selon la revendication 1 ou la revendication 2, dans lequel le dispositif de déviation de la ceinture (3) peut fonctionner de l'un ou l'autre côté de la base (2).
